# EUROPÄISCHE PATENTSCHRIFT

(11) **EP 4 368 965 B1**
(45) Veröffentlichungstag und Bekanntmachung des Hinweises auf die Patenterteilung: **06.05.2026**
(21) Anmeldenummer: 23191169.4
(22) Anmeldetag: 11.08.2023
(51) Int. Cl.: G01N 15/08

(54) **MESSSYSTEM UND VERWENDUNG EINES MESSSYSTEMS MIT EINER ERDLEITUNG**
MEASUREMENT SYSTEM AND USE OF A MEASUREMENT SYSTEM WITH AN EARTH LINE
SYSTÈME DE MESURE ET UTILISATION D'UN SYSTÈME DE MESURE COMPRENANT UNE LIGNE DE TERRE

(30) Priorität: 09.11.2022 DE 102022129657
(43) Veröffentlichungstag der Anmeldung: 15.05.2024
(73) Patentinhaber: Westnetz GmbH, 44139 Dortmund (DE)
(72) Erfinder: Ewering, Dietmar, 48565 Steinfurt (DE)
(74) Vertreter: Bals & Vogel Patentanwälte PartGmbB

(56) Entgegenhaltungen:
- EP-A1- 3 021 103
- EP-A1- 3 822 610
- DE-A1- 2 107 605

## Beschreibung

Die vorliegende Erfindung betrifft ein Messsystem zum Messen einer Permeationsrate, insbesondere zur Nachrüstung, an einer Erdleitung. Ferner betrifft die Erfindung eine Verwendung eines Messsystems zum Messen einer Permeationsrate mit einer Erdleitung.

Die Gesetzgebung und betriebliche Qualitätssicherungen erfordern zunehmende Nachweise über Zustände wie Permeationsraten von Erdleitungen. Aktuell sind am Markt keine Messmöglichkeiten für die bevorzugt dauerhafte Messung von beispielsweise Methan-und/oder Wasserstoffpermeation an erdverbauten Leitungen und Bauteilen in Leitungsnetzen etabliert. Ferner gibt es derzeit keine technischen Lösungen, insbesondere keine nachrüstbaren technischen Lösungen, für die technische Ausgestaltung von Vorrichtungen für Permeations- und/oder Emissionsmessungen an Erdgas- und/oder Wasserstoff-Netzen, insbesondere an Erdleitungen, Bestandsleitungen und/oder Bestandskomponenten.

Um valide, wissenschaftsbasierte Messungen an den Komponenten und Leitungen der Leitungsnetze und/oder Bestandsnetze auszuführen, ist die Installation von Messsystemen an den bestehenden Komponenten und Leitungen und/oder um diese herum wünschenswert und notwendig, um eine ausreichende und definierte Messumgebung und/oder Datenerfassung zu ermöglichen.

Die Bestandskomponenten und Bestandsleitungen liegen zumeist als erdverbaute Vorrichtungen in Geh- und/oder Radwegbereichen. Ferner sind Bestandskomponenten und Bestandsleitungen auch in Parkstreifen und/oder Fahrbahnoberflächen für Kraftfahrzeuge verlegt, sodass sich unterschiedliche strukturelle und messtechnische Anforderungen für ein zu schaffendes Messsystem ergeben.

Als Stand der Technik sind am Markt lediglich Schachtkonstruktionen verfügbar, die aus dem Kanalbaubereich stammen und für die Neuerrichtung von Kanälen gefertigt werden. Diese sind zumeist einteilig ausgestaltet und damit nicht oder nicht ohne Modifikation zur nachträglichen Installation um eine Bestandsleitung und/oder um Bestandskomponenten geeignet. Nachteilig ist den bekannten Schachtkonstruktionen gemein, dass diese einen großen Bauraum und folglich einen großen Erdaushub zur Installation erfordern. Ferner sind die Schachtkonstruktionen zumeist derart ausgestaltet, dass ein Schacht stets vertikal oberhalb der Erdleitung angeordnet und somit keine oder nur eine sehr geringe Flexibilität in der Anordnung der Vorrichtungen des Messsystems auf Oberflächenniveau ermöglicht wird.

Patentanmeldung EP 3,822,610 A1 beschreibt eine aus dem Stand der Technik bekannte Schelle zum Überwachen einer Rohrleitung für gelösten Wasserstoff. Durch eine Umwälzpumpe zirkuliert das in der Schelle befindliche Gas und wird an einem Sensor vorbeigeführt.

Da es sich bei den für diese Erfindung betrachteten Leitungen und Komponenten um erdverbaute Leitungen und Komponenten handelt, soll für dauerhafte und temporäre Messvorrichtungen eine vorteilhafte Messumgebung ermöglicht werden.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, ein Messsystem bereitzustellen, mit dem ein Messen einer Permeationsrate einer Erdleitung besonders einfach ermöglicht wird, wobei insbesondere ein geringer Bauraumbedarf und zumindest abschnittsweise eine flexible Anordnung ermöglicht werden. Insbesondere ist es ferner die Aufgabe der Erfindung, eine Verwendung eines Messsystems zum Messen einer Permeationsrate mit einer Erdleitung bereitzustellen. Die voranstehende Aufgabe wird durch die Patentansprüche gelöst. Insbesondere wird die Aufgabe gelöst durch ein Messsystem mit den Merkmalen des unabhängigen Anspruchs 1. Ferner wird die Aufgabe gelöst durch eine Verwendung eines Messsystems zum Messen einer Permeationsrate mit einer Erdleitung mit den Merkmalen des unabhängigen Anspruchs 13. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Messsystem beschrieben sind, selbstverständlich auch im Zusammenhang mit dem erfindungsgemäßen Verwendungsanspruch und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Messsystem zum Messen einer Permeationsrate einer Erdleitung. Das Messsystem weist eine Messraumvorrichtung mit einem zumindest abschnittsweise offenen Messvolumen innerhalb der Messraumvorrichtung, eine Befestigungsvorrichtung zur Befestigung der Messraumvorrichtung und des zumindest abschnittsweise offenen Messvolumens an der Erdleitung zur Erzeugung eines geschlossenen Messvolumens zwischen der Erdleitung und der Messraumvorrichtung, und zumindest eine Schnittstellenvorrichtung auf. Die zumindest eine Schnittstellenvorrichtung ist zum Anschluss einer Messvorrichtung zum Messen von der Permeationsrate der Erdleitung in das Messvolumen ausgestaltet. Die Schnittstellenvorrichtung und die Messraumvorrichtung sind fluidkommunizierend mit zumindest zwei Leitungsvorrichtungen des Messsystems verbunden. Die zumindest zwei Leitungsvorrichtungen umfassen jeweils eine Ventilvorrichtung zum Schließen und Öffnen der fluidkommunizierenden Verbindung zwischen der Schnittstellenvorrichtung und der Messraumvorrichtung.

Das erfindungsgemäße Messsystem ist bevorzugt zur Nachrüstung an einer bestehenden Erdleitung ausgelegt. Das Messsystem kann jedoch selbstverständlich auch beim Neubau von Erdleitungen mit dem Vorteil einer vereinfachten Montage und eines geringeren Bauraumbedarfs des Messsystems gegenüber gängigen Kanalbaulösungen verwendet werden. Die Erdleitungen sind bevorzugt als Wasserstoffleitungen, gasführende Erdleitungen, Ölkabel, Nasskabel und/oder anderweitige Erdleitungen zu verstehen.

Das erfindungsgemäße Messsystem ermöglicht beispielsweise den Netzbetreibern einen Nachweis einer maximal geringen Permeation und/oder der technischen Dichtheit der Gasnetze und/oder weiterer Erdleitungs-Netze, die emissionstechnisch betrachtet werden sollen. Das erfindungsgemäße Messsystem ermöglicht, bevorzugt über längere Zeiträume Messmöglichkeiten für einen dauerhaften Einbau an einer Erdleitung vorzusehen. Das erfindungsgemäße Messsystem ist bevorzugt als eine erdverbaute Dauer-Permeationsmesszelle zu verstehen. Bevorzugt ermöglicht das Messsystem einen Nachweis von Methanemissionen und/oder Wasserstoffemissionen einer Erdleitung. Die Erdleitung ist beispielhaft als eine 150 mm Durchmesser PEC Leitung für Erdgas zu verstehen. Das erfindungsgemäße Messsystem ist jedoch selbstverständlich auch für anderweitig ausgestaltete Erdleitungen verwendbar.

Das erfindungsgemäße Messsystem ist bevorzugt zweigeteilt zu verstehen; zum einen sind unter der Erde die Messraumvorrichtung und das Messvolumen mit der Befestigungsvorrichtung an der Erdleitung befestigbar. Zum anderen ist die Schnittstellenvorrichtung als gut erreichbare Schnittstelle von dem Messsystem beispielsweise an der Erdoberfläche und/oder in einer Wand anordenbar. Das Messsystem ist besonders vorteilhaft, da die Schnittstellenvorrichtung und die Messraumvorrichtung mit zumindest zwei Leitungsvorrichtungen, insbesondere mit ausschließlich zwei Leitungsvorrichtungen, verbunden sind. Durch die Verbindung der Schnittstellenvorrichtung und der Messraumvorrichtung mit zumindest zwei Leitungsvorrichtungen ist die Anordnung der Vorrichtungen zueinander vorteilhaft flexibel wählbar. Bevorzugt sind die zumindest zwei Leitungsvorrichtungen als gasführende, insbesondere ausschließlich gasführende, Leitungsvorrichtungen zu verstehen.

Die Messraumvorrichtung umfasst das zumindest abschnittsweise offene Messvolumen. Das Messvolumen ist bevorzugt zumindest abschnittsweise innerhalb der Messraumvorrichtung angeordnet. Die Messraumvorrichtung ist bevorzugt als ein Grundkörper zu verstehen, welcher das zumindest abschnittsweise offene Messvolumen ausbildet. Die Messraumvorrichtung und das zumindest abschnittsweise offene Messvolumen sind durch die Befestigungsvorrichtung an der Erdleitung befestigbar. Die Befestigungsvorrichtung ist bevorzugt als Klemmvorrichtung, Pressvorrichtung, Schraubvorrichtung und/oder anderweitige Befestigungsvorrichtung ausgestaltet. Die Befestigung der Messraumvorrichtung erfolgt bevorzugt derart, dass die Messraumvorrichtung und das zumindest abschnittsweise offene Messvolumen an und/oder um die Erdleitung angeordnet und befestigt werden, wobei die Erdleitung das zumindest abschnittsweise offene Messvolumen zu dem geschlossenen Messvolumen verschließt. Anschaulich beschrieben werden die Messraumvorrichtung und das zumindest abschnittsweise offene Messvolumen an die Erdleitung angebracht und durch und/oder gegen die Erdleitung abgedichtet. Durch die Messraumvorrichtung und das zumindest abschnittsweise offene Messvolumen wird somit ein geschlossenes, definiertes Volumen an der Erdleitung erzeugt, in welches die Erdleitung Gas abgeben, diffundieren und/oder ausdünsten kann, wobei die Permeationsrate der Erdleitung durch das Messsystem messbar ist. Der offene Abschnitt des Messvolumens ist folglich bevorzugt für die Befestigung an der Erdleitung anordenbar.

Für die Messung der Permeationsrate weist das Messsystem die Schnittstellenvorrichtung auf. Die Schnittstellenvorrichtung ist zum Anschluss einer Messvorrichtung zum Messen von Permeation von Gas aus der Erdleitung in das Messvolumen ausgestaltet. Die Messvorrichtung ist, wie nachfolgend detailliert beschrieben, als separate Messvorrichtung und/oder als Messvorrichtung des Messsystems ausgestaltet. Die Messvorrichtung ist zum Messen der Permeationsrate einer Erdleitung ausgestaltet. Das Messen der Permeationsrate erfolgt bevorzugt über die Zeit, in Intervallen, Event-getriggert, manuell und/oder automatisch. Bevorzugt umfasst die Schnittstellenvorrichtung und/oder die Messvorrichtung eine Anzeigevorrichtung zur Anzeige der gemessenen Permeationsrate. Bevorzugt umfasst die Schnittstellenvorrichtung eine Energieversorgungsvorrichtung zur kabellosen oder kabelgebundenen Energieversorgung der Messvorrichtung. Ferner ermöglicht das erfindungsgemäße Messsystem mit wenigstens einer Messvorrichtung den Netzbetreibern die Möglichkeit zur fundierten und validen Nachweisführung der Einhaltung der Emissionsvorgaben beispielsweise des Gesetzgebers für Erdleitungen. Bevorzugt umfasst die Messvorrichtung eine Logikeinheit, insbesondere eine Rechnereinheit, zur Auswertung der erfassten Daten. Besonders bevorzugt umfasst die Messvorrichtung und/oder die Logikeinheit eine Speichervorrichtung zur Speicherung der erfassten Daten.

Die Schnittstellenvorrichtung ist bevorzugt in einem Bodenabschnitt einer Straße, einer Parkfläche, eines Gehwegs, eines Gebäudes und/oder eines Bauwerks und/oder in einem Wandabschnitt eines Gebäudes und/oder eines Bauwerks anordenbar. Anschaulich beschrieben ist die Schnittstellenvorrichtung als Wandkasten und/oder als Straßenkappe ausgestaltet. Bevorzugt sind die Schnittstellenvorrichtung und die Messraumvorrichtung separat voneinander ausgestaltet und/oder anordenbar. Entgegen den zu Beginn erwähnten Schachtlösungen sind die Schnittstellenvorrichtung und die Messraumvorrichtung bevorzugt in einer Einbaulage durch Erdreich getrennt voneinander anordenbar. Insbesondere sind die Schnittstellenvorrichtung und die Messraumvorrichtung nur durch die zumindest zwei Leitungsvorrichtungen miteinander verbunden, sodass eine Anordnung und/oder ein seitlicher Versatz in der Einbaulage und/oder -position der Schnittstellenvorrichtung und der Messraumvorrichtung flexibel ermöglicht ist. Durch die Verbindung der Schnittstellenvorrichtung mit der Messraumvorrichtung durch die zumindest zwei Leitungsvorrichtungen ist das Messsystem mit einfachen Mitteln an unterschiedliche Einbautiefen von Erdleitungen anpassbar.

Die zumindest zwei Leitungsvorrichtungen sind bevorzugt als Leitungen, Rohre, Schläuche, Flexleitungen und/oder anderweitige, insbesondere gasdichte, druckdichte und/oder wasserdichte, Leitungsvorrichtungen zu verstehen. Die zumindest zwei Leitungsvorrichtungen weisen jeweils zumindest eine Ventilvorrichtung zum Schließen und Öffnen der fluidkommunizierenden Verbindung zwischen der Schnittstellenvorrichtung und der Messraumvorrichtung auf. Die zumindest zwei Leitungsvorrichtungen ermöglichen somit eine fluidkommunizierende Verbindung zwischen der Messraumvorrichtung und der Schnittstellenvorrichtung, insbesondere der Messvorrichtung, zum Messen einer Permeationsrate der Erdleitung in das Messvolumen. Über die zumindest zwei Leitungsvorrichtungen erfolgt somit ein Fluidaustausch zwischen der Messvorrichtung und dem Messvolumen zum Messen einer Permeationsrate der Erdleitung. Um ein definiertes, geschlossenes Messvolumen zu erzeugen, sind die zumindest zwei Leitungsvorrichtungen durch die Ventilvorrichtungen schließbar ausgestaltet. Die Ventilvorrichtungen sind beispielsweise als Kugelhahn, Sperrventil und/oder als anderweitige Ventilvorrichtung ausgestaltet. Das Öffnen und Schließen der Ventilvorrichtungen erfolgt bevorzugt mechanisch, hydraulisch, elektrisch und/oder pneumatisch.

Ein derart ausgestaltetes Messsystem ist besonders vorteilhaft, da eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Messraumvorrichtung zumindest zwei Durchführungsöffnungen umfasst, wobei die zumindest zwei Durchführungsöffnungen zur Durchführung von der Erdleitung in die und aus der Messraumvorrichtung ausgestaltet sind.

Wie voranstehend beschrieben ist die Messraumvorrichtung bevorzugt als Aufsatz für die Erdleitung und/oder als eine die Erdleitung umschließende und/oder als ringförmige Messraumvorrichtung ausgestaltet. Die Messraumvorrichtung weist bevorzugt zumindest zwei Durchführungsöffnungen für die Durchführung der Erdleitung in die und aus der Messraumvorrichtung auf. Beispielsweise für Verzweigungen der Erdleitung, Kreuzung von zumindest zwei Erdleitungen oder anderweitige Ausgestaltungen der Erdleitung kann eine erfindungsgemäße Messraumvorrichtung jedoch auch drei oder mehr Durchführungsöffnungen für die wenigstens eine Erdleitung umfassen.

Die erfindungsgemäße Messraumvorrichtung ist bevorzugt modular ausgestaltet, sodass mit einfachen und kostengünstigen Mitteln eine Skalierbarkeit für die Größe sowie die Teilung der Erdleitung und eine Anpassung der Anzahl und Positionen der Durchführungsöffnungen an verschiedene Erdleitungen erreicht werden kann.

Ein derart ausgestaltetes Messsystem ist besonders vorteilhaft, da durch die Durchführungsöffnungen eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Messraumvorrichtung zumindest zwei Messraumvorrichtungshälften umfasst, wobei die zumindest zwei Messraumvorrichtungshälften zur gemeinsamen Ausbildung von den wenigstens zwei Durchführungsöffnungen ausgestaltet sind, wobei insbesondere die wenigstens zwei Messraumvorrichtungshälften vertikal und/oder horizontal miteinander koppelbar ausgestaltet sind.

Das erfindungsgemäße Messsystem ist besonders vorteilhaft, weil die Messraumvorrichtung zumindest zwei Messraumvorrichtungshälften umfasst, die zur gemeinsamen Ausbildung von wenigstens zwei Durchführungsöffnungen des Messsystems ausgestaltet sind. Dafür ist beispielsweise jeweils eine Hälfte einer Durchführungsöffnung an den zumindest zwei Messraumvorrichtungshälften, insbesondere an einem Randabschnitt der zumindest zwei Messraumvorrichtungshälften, angeordnet, wobei die zumindest zwei Messraumvorrichtungshälften über bzw. an diesen Randabschnitten miteinander koppelbar sind. Somit ermöglichen die zumindest zwei Messraumvorrichtungshälften durch eine Kopplung der zwei Hälften der Durchführungsöffnung eine gemeinsame Durchführungsöffnung. Anschaulich beschrieben weist somit jede der zumindest zwei Messraumvorrichtungshälften einen Teilabschnitt der Durchführungsöffnung auf, wobei die zumindest zwei Messraumvorrichtungshälften aufgrund ihrer erfindungsgemäßen Ausgestaltung vorteilhaft von zumindest zwei Seiten um die Erdleitung, insbesondere die bestehende Erdleitung, montierbar sind und mit der Montage die gemeinsamen Durchführungsöffnungen für die Erdleitung ausbilden. Besonders vorteilhaft ist somit bei dem erfindungsgemäßen Messsystem, dass kein Durchstecken einer Erdleitung durch die Messraumvorrichtung notwendig ist.

Die erfindungsgemäße Kopplung der wenigstens zwei Messraumvorrichtungshälften ist beispielsweise als formschlüssige Kopplung ohne zusätzliche Verbindungsmittel und/oder als stoffschlüssige Kopplung unter Verwendung von zumindest einem Verbindungsmittel ausgestaltet. Beispielhafte Verbindungsmittel sind Dichtungsvorrichtungen, Baukleber, Bauschaum und/oder anderweitige chemische und/oder mechanische Verbindungsmittel. Bevorzugt ist die Kopplung der wenigstens zwei Messraumvorrichtungshälften wasserdicht oder im Wesentlichen wasserdicht ausgestaltet. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende beabsichtigte Funktion des Merkmals zu verändern. Durch die wasserdichte Ausführung der Kopplung der wenigstens zwei Messraumvorrichtungshälften kann die Messraumvorrichtung beispielsweise auch in Bereichen eingebracht werden, in denen mit Stauwasser zu rechnen ist. Insbesondere die Messraumvorrichtung ist so vor äußeren Einwirkungen optimal geschützt. Eine wasserdichte Ausführung der wenigstens zwei Messraumvorrichtungshälften erfolgt bevorzugt durch die Materialwahl der wenigstens zwei Messraumvorrichtungshälften und/oder durch eine Beschichtung der wenigstens zwei Messraumvorrichtungshälften.

Insbesondere ist bei einem Messsystem vorgesehen, dass die wenigstens zwei Messraumvorrichtungshälften vertikal und/oder horizontal miteinander koppelbar ausgestaltet sind. Ferner ist es natürlich auch möglich, dass die wenigstens zwei Messraumvorrichtungshälften winklig miteinander koppelbar sind, wobei jedoch eine vertikale und/oder horizontale Kopplung der wenigstens zwei Messraumvorrichtungshälften bevorzugt wird. Eine vertikale Kopplung der wenigstens zwei Messraumvorrichtungshälften ist insofern vorteilhaft, dass eine Verdichtung des Erdreichs bzw. des Untergrunds vorteilhaft ermöglicht wird, da die wenigstens zwei Messraumvorrichtungshälften seitlich an die Erdleitung herangeführt und um die Erdleitung montiert und/oder gekoppelt werden. Eine horizontale Kopplung von wenigstens zwei Messraumvorrichtungshälften ermöglicht bevorzugt, dass der Boden und die angrenzende Wandung der Messraumvorrichtung aus einer einzigen Messraumvorrichtungshälfte bestehen.

Ein derart ausgestaltetes Messsystem ist besonders vorteilhaft, da durch die Ausgestaltung der Messraumvorrichtungshälften eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Messraumvorrichtung wenigstens eine Dichtvorrichtung zur Abdichtung der Messraumvorrichtung, insbesondere der wenigstens zwei Durchführungsöffnungen, zur Erdleitung umfasst. Die erfindungsgemäßen Dichtvorrichtungen sind beispielsweise als Ringraumdichtung, insbesondere als segmentierte, skalierbare und/oder auf die Messraumvorrichtung abstimmbare Ringraumdichtung, Dichtmaterial und/oder zumindest ein Dichtstoff ausgestaltet. Die Dichtvorrichtungen ermöglichen eine Abdichtung des Innenraums der Messraumvorrichtung gegen die Erdleitung und damit auch gegen Einflüsse aus der Umgebung, wie beispielsweise eindringendes Erdreich, Sand, Pflanzen, Tiere und/oder Wasser. Die Ausgestaltung der Dichtvorrichtungen als Ringraumdichtung sehen bevorzugt eine zweiteilige Ausgestaltung und/oder einen Einschnitt der Ringraumdichtung vor, sodass die Ringraumdichtung an eine bestehende Erdleitung installierbar ist. Ein derart ausgestaltetes Messsystem ist besonders vorteilhaft, da durch die Dichtvorrichtungen eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Schnittstellenvorrichtung zum Anschluss einer Messvorrichtung des Messsystems und/oder zum lösbaren Anschluss einer mobilen Messvorrichtung ausgestaltet ist. Wie voranstehend beschrieben ist die Messvorrichtung als Bestandteil des Messsystems oder als separate Messvorrichtung definiert. Bevorzugt ist die Schnittstellenvorrichtung an der Messvorrichtung des Messsystems angeschlossen. Die separate Messvorrichtung ist beispielsweise als ein mobiler Messvorrichtungskoffer ausgestaltet, der an die Schnittstellenvorrichtung lösbar und zeitweise zum Messen der Permeationsrate angeschlossen wird. Eine mobile Messvorrichtung ist vorteilhaft ressourcensparend, da die mobile Messvorrichtung für eine Vielzahl an Messsystemen verwendbar ist. Eine Messvorrichtung des Messsystems ist bevorzugt festinstalliert und/oder mit der Schnittstellenvorrichtung in einem Grundkörper und/oder Gehäuse angeordnet. Die Messvorrichtung ist an der Schnittstellenvorrichtung lösbar anschließbar oder fest mit der Schnittstellenvorrichtung fluidkommunizierend verbunden. Ein derart ausgestaltetes Messsystem ist besonders vorteilhaft, da durch die Ausgestaltung der Messvorrichtung eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Schnittstellenvorrichtung eine Steuerschnittstelle zur Steuerung der zumindest zwei Ventilvorrichtungen zum Schließen und Öffnen der fluidkommunizierenden Verbindung zwischen der Schnittstellenvorrichtung und der Messraumvorrichtung umfasst. Die Steuerschnittstelle ist bevorzugt zum Anschluss an die Messvorrichtung ausgestaltet, sodass das Messen der Permeationsrate der Erdleitung und die Steuerung der Ventilvorrichtungen durch die Messvorrichtung, insbesondere aufeinander abgestimmt, ermöglicht wird. Das Steuern der Ventilvorrichtungen durch die Steuerschnittstelle erfolgt bevorzugt mechanisch, hydraulisch, elektrisch und/oder pneumatisch. Die Wirkverbindung zwischen der Steuerschnittstelle und den Ventilvorrichtungen ist beispielsweise mit Flexwellen, Datenkabeln, Signalkabeln, Hydraulikleitungen und/oder Pneumatikleitungen ausgestaltet. Ein derart ausgestaltetes Messsystem ist besonders vorteilhaft, da durch die Steuerschnittstelle eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Schnittstellenvorrichtung einen Grundkörper und eine Deckelvorrichtung umfasst, wobei die Deckelvorrichtung zum Schließen und Öffnen des Grundkörpers ausgestaltet ist. Die Ausgestaltung der Schnittstellenvorrichtung mit einem Grundkörper und einer Deckelvorrichtung ermöglicht eine vorteilhafte Zugänglichkeit der Schnittstellenvorrichtung bei geöffneter Deckelvorrichtung und eine vorteilhafte Sicherung der Schnittstellenvorrichtung bei geschlossener Deckelvorrichtung. Bevorzugt ist die Schnittstellenvorrichtung in der Praxis als Vorrichtung im Boden im Straßen- und/oder Fußgängerverkehrsbereich ausgestaltet. Beispielhaft ist der Grundkörper als ein Gehäuse der Schnittstellenvorrichtung zu verstehen. Beispielhaft ist die Deckelvorrichtung wie eine Gullydeckel- und/oder Schachtdeckelvorrichtung ausgestaltet. Alternativ oder zusätzlich ist die Schnittstellenvorrichtung, mit einem Grundkörper und einer Deckelvorrichtung vergleichbar, mit einem elektrischen Sicherungskasten an und/oder in einer Wand ausgestaltet. Ein derart ausgestaltetes Messsystem ist besonders vorteilhaft, da durch die Ausgestaltung der Schnittstellenvorrichtung eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die Deckelvorrichtung einen Deckelring und einen Deckel innerhalb des Deckelrings umfasst, wobei der Deckelring und/oder der Deckel gleitend, schwimmend und/oder gelagert an dem Grundkörper angeordnet sind und/oder wobei die Deckelvorrichtung befahrbar und auflastsicher für wenigstens 40 t ausgestaltet ist. Der Deckelring ist bevorzugt rund oder eckig als Deckelrahmen zu verstehen. Bei einer Anordnung der Deckelvorrichtung in einem Bodenbereich treten zumeist Krafteinwirkungen durch Überfahrten von Kraftfahrzeugen auf. Der Deckel ist bevorzugt innerhalb des Deckelrings derart angeordnet, dass eine flexible Anbindung des Deckels an den Deckelring eine Weiterleitung von Scherkräften auf die Leitungsvorrichtungen und/oder die Erdleitung vorteilhaft reduziert und/oder vermieden wird. Anschaulich und bespielhaft beschrieben ist die Deckelvorrichtung als eine obere Abdeckung des Messsystems, insbesondere der Schnittstellenvorrichtung, zu verstehen, die bevorzugt ein Verschließen und Öffnen der Schnittstellenvorrichtung ermöglicht und somit eine zumindest zeitweise Zugänglichkeit ermöglicht. Die Deckelvorrichtung ist bevorzugt abschließbar gegen unbefugten Zugang ausgestaltet. Der Deckelring umfasst bevorzugt Beton. Der Deckel umfasst bevorzugt Stahl und/oder Beton. Zur vorteilhaften Vermeidung und/oder wenigstens zur Reduzierung einer Einleitung von Kräften, insbesondere Scherkräften, durch eine Überfahrt eines Kraftfahrzeugs in die Erdleitung und/oder das weitere Messsystem, insbesondere durch die wenigstens zwei Durchführöffnungen für die Erdleitung, ist der Deckelring und/oder der Deckel gleitend, schwimmend und/oder gelagert an dem Grundkörper angeordnet. Eine derart ausgestaltete konstruktive Ausgestaltung der Deckelvorrichtung ermöglicht vorteilhaft eine Vermeidung und/oder wenigstens eine Reduzierung der Übertragung von Krafteinwirkungen der Umgebung auf das weitere Messsystem und/oder auf die Erdleitung. Mit anderen Worten ermöglicht die beschriebene Ausgestaltung der Deckelvorrichtung eine gegen eine Krafteinleitung isolierte oder im Wesentlichen isolierte Anordnung der Deckelvorrichtung in Relation zur Schnittstellenvorrichtung, dem Grundkörper, der Messraumvorrichtung und/oder zur Erdleitung. Anschaulich beschrieben ist das Messsystem bevorzugt derart ausgestaltet, dass die Deckelvorrichtung gleitend auf und/oder an dem Grundkörper gelagert ist, sodass durch Auflasten (LKW, PKW, Fahrverkehr) entstehende Scherkräfte nicht auf die zu überwachenden Bestandskomponenten und/oder Bestandsleitungen einwirken können. Besonders bevorzugt ist die Deckelvorrichtung befahrbar und auflastsicher für wenigstens 40 t ausgestaltet. Es ist eine vorteilhafte Weiterentwicklung des erfindungsgemäßen Messsystems, wenn die Deckelvorrichtung einer Belastungsklasse D entspricht und damit einer Belastung mit 400 kN Prüfkraft standhält. Eine derart ausgestaltete Deckelvorrichtung ermöglicht vorteilhaft die Verbauung des Messsystems in Fahrbahnen von Straßen, auch Fußgängerstraßen, Seitenstreifen von Straßen und Parkflächen, die für alle Arten von Straßenfahrzeugen zugelassen sind. Durch die auflastsichere Ausführung kann das Messsystem vorteilhaft in Ortssituationen mit Fahrbahnoberflächen oder Parkplätzen eingebaut werden. Ein derart ausgestaltetes Messsystem ist besonders vorteilhaft, da durch die Ausgestaltung der Deckelvorrichtung eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass die zumindest zwei Leitungsvorrichtungen die Schnittstellenvorrichtung und die Messraumvorrichtung zumindest abschnittsweise starr und/oder flexibel fluidkommunizierend verbinden. Die zumindest zwei Leitungsvorrichtungen sind bevorzugt als Leitungen, Rohre, Schläuche, Flexleitungen und/oder anderweitige, insbesondere gasdichte, druckdichte und/oder wasserdichte, Leitungsvorrichtungen zu verstehen. Eine zumindest abschnittsweise flexible Ausgestaltung der zumindest zwei Leitungsvorrichtungen ermöglicht eine vorteilhafte Montage des Messsystems und eine Flexibilität der Anordnung der Schnittstellenvorrichtung gegenüber der Messraumvorrichtung. Eine zumindest abschnittsweise starre Ausgestaltung der zumindest zwei Leitungsvorrichtungen ermöglicht wiederum eine vorteilhafte Stabilität der Leitungsvorrichtungen. Ein derart ausgestaltetes Messsystem ist besonders vorteilhaft, da durch die Ausgestaltung der zumindest zwei Leitungsvorrichtungen eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass das Messsystem wenigstens eine Sensoreinheit zur Erfassung von Druck und/oder Temperatur in dem Messvolumen umfasst. Eine Erfassung von Druck-und/oder Temperaturwerten ermöglicht vorteilhaft eine verbesserte Auswertung der Permeationsrate der Erdleitung durch die Messvorrichtung und/oder eine Logikeinheit. Bevorzugt ist die Sensoreinheit datenkommunizierend mit der Messvorrichtung und/oder der Logikeinheit verbunden. Bevorzugt sind die Druck- und/oder Temperaturwerte über die Zeit erfassbar. Anschaulich formuliert ist es zur Analyse und/oder Zustandsüberwachung der Erdleitung vorteilhaft im Rahmen der Erfindung, wenn begleitende Faktoren, wie z. B. Boden- und Lufttemperatur, neben den Betriebsparametern, wie Druck in der Leitung, Gastemperatur und den Werten der um die Leitung bzw. Komponente angebrachten Messvorrichtung, durch wenigstens eine Sensoreinheit erfassbar und/oder in regelmäßigen Zeitabständen auslesbar sind. Ein derart ausgestaltetes Messsystem ist besonders vorteilhaft, da durch die Sensoreinheit eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass das Messsystem eine Sende- und/oder Empfangseinheit zum Senden und/oder Empfangen von Daten der Messvorrichtung und/oder der wenigstens einen Sensoreinheit umfasst. Bevorzugt sind die Sende- und/oder Empfangseinheit, die Messvorrichtung und/oder die wenigstens eine Sensoreinheit datenkommunizierend miteinander verbunden. Bevorzugt ist die Logikeinheit des Messsystems ebenfalls datenkommunizierend mit den voranstehenden Vorrichtungen verbunden. Eine Übermittlung der erfassten und/oder analysierten Daten der Messvorrichtung und/oder der wenigstens einen Sensoreinheit, beispielsweise an eine Servervorrichtung, eine Datenbank, ein Rechenzentrum und/oder eine anderweitige digitale Bereitstellungsmöglichkeit durch die Sende- und/oder Empfangseinheit stellt eine vorteilhafte Möglichkeit zur Auswertung der erfassten Daten zur Zustandsüberprüfung der Erdleitung dar. Die Sende- und/oder Empfangseinheit ist bevorzugt als GSM-Modul, Ethernet-Vorrichtung, Glasfaservorrichtung und/oder anderweitige Sende- und/oder Empfangseinheit ausgestaltet. Ein derart ausgestaltetes Messsystem ist besonders vorteilhaft, da durch die Sende- und/oder Empfangseinheit eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einer bevorzugten Weiterentwicklung der Erfindung kann bei einem Messsystem vorgesehen sein, dass das Messsystem und/oder die Messvorrichtung eine Spülvorrichtung umfasst, wobei die Spülvorrichtung zur Spülung des Messvolumens mit einem Spülmedium ausgestaltet ist. Das Spülen erfolgt bevorzugt mit einem Spülmedium, wie beispielsweise Stickstoff oder Helium. Besagter Stickstoff oder besagtes Helium wirken sich beispielhaft vorteilhaft neutral für die Analyse der Permeationsrate aus. Das Spülmedium wird bevorzugt durch einen Tank der Messvorrichtung und/oder des Messsystems bereitgestellt. Die Spülvorrichtung umfasst bevorzugt eine Pumpenvorrichtung zur Förderung des Spülmediums. Durch ein initiales Spülen des Messvolumens wird ein vorteilhafter Ausgangspunkt einer Konzentration in dem Messvolumen für das Messen der Permeationsrate der Erdleitung ermöglicht. Ein derart ausgestaltetes Messsystem ist besonders vorteilhaft, da durch die Spülvorrichtung eine Messung einer Permeationsrate einer Erdleitung und/oder eine Nachrüstung des Messsystems an einer Erdleitung besonders einfach ermöglicht wird, wobei ein geringer Bauraumbedarf für den Einbau des Messsystems benötigt wird.

Gemäß einem zweiten Aspekt der Erfindung wird die Aufgabe durch eine Verwendung eines Messsystems zum Messen einer Permeationsrate mit einer Erdleitung gelöst. Das Messsystem ist gemäß dem ersten Aspekt ausgestaltet. Bei der beschriebenen Verwendung des Messsystems mit der Erdleitung ergeben sich sämtliche Vorteile, die bereits zu dem Messsystem gemäß dem ersten Aspekt der Erfindung beschrieben worden sind.

Ein erfindungsgemäßes Messsystem wird nachfolgend anhand von Zeichnungen näher erläutert. Es zeigen jeweils schematisch:
- Figur 1: in einer perspektivischen Ansicht ein Messsystem mit einer Erdleitung,
- Figur 2: in einer geschnittenen Seitenansicht ein Messsystem mit einer Erdleitung und
- Figur 3: in einer Frontalansicht ein Messsystem mit einer Erdleitung.

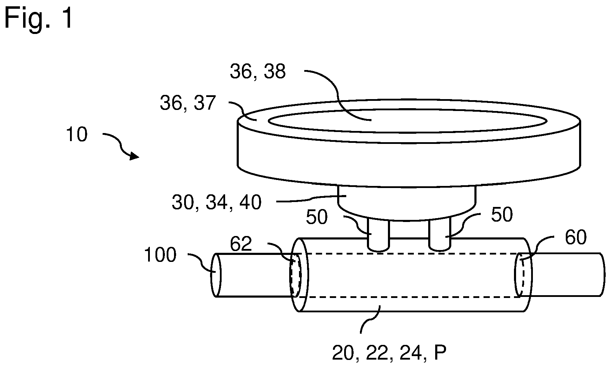

Elemente mit gleicher Funktion und Wirkungsweise sind in den Fig. 1 bis 3 jeweils mit denselben Bezugszeichen versehen.

In Fig. 1 ist schematisch in einer perspektivischen Ansicht ein Messsystem 10 mit einer Erdleitung 100 gezeigt. Das Messsystem 10 ist zum Messen der Permeationsrate P der Erdleitung 100 ausgestaltet. Das Messsystem 10 weist eine Messraumvorrichtung 20 mit einem abschnittsweise offenen Messvolumen 24 innerhalb der Messraumvorrichtung 20, eine Befestigungsvorrichtung 22 zur Befestigung der Messraumvorrichtung 20 und des abschnittsweise offenen Messvolumens 24 an der Erdleitung 100 zur Erzeugung eines geschlossenen Messvolumens 24 zwischen der Erdleitung 100 und der Messraumvorrichtung 20, und eine Schnittstellenvorrichtung 30 auf. Die Schnittstellenvorrichtung 30 ist mit einer Messvorrichtung 40 zum Messen von der Permeationsrate der Erdleitung 100 in das Messvolumen 24 verbunden, wobei die Schnittstellenvorrichtung 30 und die Messraumvorrichtung 20 fluidkommunizierend mit zwei Leitungsvorrichtungen 50 des Messsystems 10 verbunden sind. Die Messraumvorrichtung 20 umfasst zwei Durchführungsöffnungen 60, 62, wobei die zwei Durchführungsöffnungen 60, 62 zur Durchführung von der Erdleitung 100 in die und aus der Messraumvorrichtung 20 ausgestaltet sind. Die Schnittstellenvorrichtung 30 ist an der Messvorrichtung 40 des Messsystems 10 angeschlossen. Die zwei Leitungsvorrichtungen 50 verbinden die Schnittstellenvorrichtung 30 und die Messraumvorrichtung 20 abschnittsweise flexibel fluidkommunizierend. Die Schnittstellenvorrichtung 30 umfasst einen Grundkörper 34 und eine Deckelvorrichtung 36, wobei die Deckelvorrichtung 36 zum Schließen und Öffnen des Grundkörpers 34 ausgestaltet ist. Die Deckelvorrichtung 36 umfasst einen Deckelring 37 und einen Deckel 38 innerhalb des Deckelrings 37, wobei der Deckelring 37 und der Deckel 38 gleitend an dem Grundkörper 34 angeordnet sind.

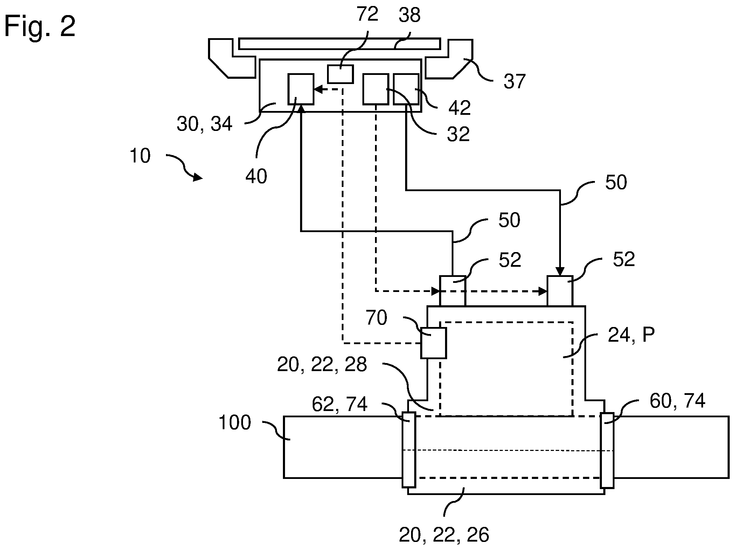

In Fig. 2 ist schematisch in einer geschnittenen Seitenansicht ein Messsystem 10 mit einer Erdleitung 100 gezeigt. Die Messraumvorrichtung 20 umfasst zwei Messraumvorrichtungshälften 26, 28, wobei die zwei Messraumvorrichtungshälften 26, 28 zur gemeinsamen Ausbildung von den zwei Durchführungsöffnungen 60, 62 ausgestaltet sind, wobei die zwei Messraumvorrichtungshälften 26, 28 horizontal miteinander koppelbar ausgestaltet sind. Die Messraumvorrichtung 20 umfasst zwei Dichtvorrichtung 74 zur Abdichtung der Messraumvorrichtung 20, hier der zwei Durchführungsöffnungen 60, 62, zur Erdleitung 100. Die zwei Leitungsvorrichtungen 50 umfassen jeweils eine Ventilvorrichtung 52 zum Schließen und Öffnen der fluidkommunizierenden Verbindung zwischen der Schnittstellenvorrichtung 30 und der Messraumvorrichtung 20. Die Schnittstellenvorrichtung 30 umfasst eine Steuerschnittstelle 32 zur Steuerung der zwei Ventilvorrichtungen 52 zum Schließen und Öffnen der fluidkommunizierenden Verbindung zwischen der Schnittstellenvorrichtung 30 und der Messraumvorrichtung 20. Die Schnittstellenvorrichtung 30 umfasst einen Grundkörper 34 und eine Deckelvorrichtung 36, wobei die Deckelvorrichtung 36 zum Schließen und Öffnen des Grundkörpers 34 ausgestaltet ist. Die Deckelvorrichtung 36 umfasst einen Deckelring 37 und einen Deckel 38 innerhalb des Deckelrings 37, wobei der Deckelring 37 schwimmend an dem Grundkörper 34 angeordnet ist und wobei die Deckelvorrichtung 36 befahrbar und auflastsicher für wenigstens 40 t ausgestaltet ist. Das Messsystem 10 umfasst eine Sensoreinheit 70 zur Erfassung von Druck und Temperatur in dem Messvolumen 24. Das Messsystem 10 umfasst eine Sende- und Empfangseinheit 72 zum Senden und Empfangen von Daten der Messvorrichtung 40 und der Sensoreinheit 70. Das Messsystem 10 umfasst eine Spülvorrichtung 42, wobei die Spülvorrichtung 42 zur Spülung des Messvolumens 24 mit einem Spülmedium ausgestaltet ist.

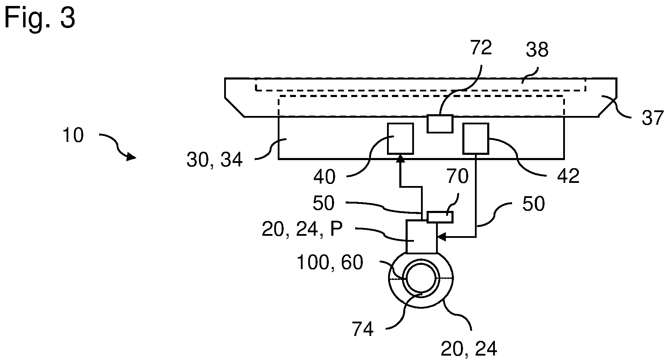

In Fig. 3 ist schematisch in einer Frontalansicht ein Messsystem 10 mit einer Erdleitung 100 gezeigt. Durch die Perspektive von Fig. 3 ist nur eine Dichtvorrichtung 74 zur Abdichtung der Messraumvorrichtung 20, hier der zwei Durchführungsöffnungen 60, 62, zur Erdleitung 100 sichtbar. Die zwei Leitungsvorrichtungen 50 ermöglichen eine fluidkommunizierende Verbindung zwischen der Schnittstellenvorrichtung 30 und der Messraumvorrichtung 20. Die Schnittstellenvorrichtung 30 umfasst einen Grundkörper 34 und eine Deckelvorrichtung 36, wobei die Deckelvorrichtung 36 zum Schließen und Öffnen des Grundkörpers 34 ausgestaltet ist. Die Deckelvorrichtung 36 umfasst einen Deckelring 37 und einen Deckel 38 innerhalb des Deckelrings 37, wobei der Deckelring 37 schwimmend an dem Grundkörper 34 angeordnet ist. Das Messsystem 10 umfasst eine Sensoreinheit 70 zur Erfassung von Druck und Temperatur in dem Messvolumen 24. Das Messsystem 10 umfasst eine Sende- und Empfangseinheit 72 zum Senden und Empfangen von Daten der Messvorrichtung 40 und der Sensoreinheit 70. Das Messsystem 10 umfasst eine Spülvorrichtung 42, wobei die Spülvorrichtung 42 zur Spülung des Messvolumens 24 mit einem Spülmedium ausgestaltet ist.

### Bezugszeichenliste

- 10: Messsystem

- 20: Messraumvorrichtung
- 22: Befestigungsvorrichtung
- 24: Messvolumen
- 26: Messraumvorrichtungshälfte
- 28: Messraumvorrichtungshälfte

- 30: Schnittstellenvorrichtung
- 32: Steuerschnittstelle
- 34: Grundkörper
- 36: Deckelvorrichtung
- 37: Deckelring
- 38: Deckel

- 40: Messvorrichtung
- 42: Spülvorrichtung

- 50: Leitungsvorrichtung
- 52: Ventilvorrichtung

- 60: Durchführungsöffnung
- 62: Durchführungsöffnung

- 70: Sensoreinheit
- 72: Sende- und/oder Empfangseinheit
- 74: Dichtvorrichtung

- 100: Erdleitung

- P: Permeationsrate

## Patentansprüche

1. Messsystem (10) zum Messen einer Permeationsrate (P) einer Erdleitung (100), das Messsystem (10) aufweisend eine Messraumvorrichtung (20) mit einem zumindest abschnittsweise offenen Messvolumen (24) innerhalb der Messraumvorrichtung (20), eine Befestigungsvorrichtung (22) zur Befestigung der Messraumvorrichtung (20) und des zumindest abschnittsweise offenen Messvolumens (24) an der Erdleitung (100) zur Erzeugung eines geschlossenen Messvolumens (24) zwischen der Erdleitung (100) und der Messraumvorrichtung (20), und zumindest eine Schnittstellenvorrichtung (30), wobei die zumindest eine Schnittstellenvorrichtung (30) zum Anschluss einer Messvorrichtung (40) zum Messen von der Permeationsrate (P) der Erdleitung (100) in das Messvolumen (24) ausgestaltet ist, wobei die Schnittstellenvorrichtung (30) und die Messraumvorrichtung (20) fluidkommunizierend mit zumindest zwei Leitungsvorrichtungen (50) des Messsystems (10) verbunden sind und **dadurch gekennzeichnet, dass**
die zumindest zwei Leitungsvorrichtungen (50) jeweils eine Ventilvorrichtung (52) zum Schließen und Öffnen der fluidkommunizierenden Verbindung zwischen der Schnittstellenvorrichtung (30) und der Messraumvorrichtung (20) umfassen.

2. Messsystem (10) nach Anspruch 1,
**dadurch gekennzeichnet,**
**dass** die Messraumvorrichtung (20) zumindest zwei Durchführungsöffnungen (60, 62) umfasst, wobei die zumindest zwei Durchführungsöffnungen (60, 62) zur Durchführung von der Erdleitung (100) in die und aus der Messraumvorrichtung (20) ausgestaltet sind.

3. Messsystem (10) nach Anspruch 2,
**dadurch gekennzeichnet,**
**dass** die Messraumvorrichtung (20) zumindest zwei Messraumvorrichtungshälften (26, 28) umfasst, wobei die zumindest zwei Messraumvorrichtungshälften (26, 28) zur gemeinsamen Ausbildung von den wenigstens zwei Durchführungsöffnungen (60, 62) ausgestaltet sind, insbesondere wobei die wenigstens zwei Messraumvorrichtungshälften (26, 28) vertikal und/oder horizontal miteinander koppelbar ausgestaltet sind.

4. Messsystem (10) nach einem der vorangegangenen Ansprüche,
**dadurch gekennzeichnet,**
**dass** die Messraumvorrichtung (20) wenigstens eine Dichtvorrichtung (74) zur Abdichtung der Messraumvorrichtung (20), insbesondere der wenigstens zwei Durchführungsöffnungen (60, 62), zur Erdleitung (100) umfasst.

5. Messsystem (10) nach einem der vorangegangenen Ansprüche,
**dadurch gekennzeichnet,**
**dass** die Schnittstellenvorrichtung (30) zum Anschluss einer Messvorrichtung (40) des Messsystems (10) und/oder zum lösbaren Anschluss einer mobilen Messvorrichtung (40) ausgestaltet ist.

6. Messsystem (10) nach einem der vorangegangenen Ansprüche,
**dadurch gekennzeichnet,**
**dass** die Schnittstellenvorrichtung (30) eine Steuerschnittstelle (32) zur Steuerung der zumindest zwei Ventilvorrichtungen (52) zum Schließen und Öffnen der fluidkommunizierenden Verbindung zwischen der Schnittstellenvorrichtung (30) und der Messraumvorrichtung (20) umfasst.

7. Messsystem (10) nach einem der vorangegangenen Ansprüche,
**dadurch gekennzeichnet,**
**dass** die Schnittstellenvorrichtung (30) einen Grundkörper (34) und eine Deckelvorrichtung (36) umfasst, wobei die Deckelvorrichtung (36) zum Schließen und Öffnen des Grundkörpers (34) ausgestaltet ist.

8. Messsystem (10) nach Anspruch 7,
**dadurch gekennzeichnet,**
**dass** die Deckelvorrichtung (36) einen Deckelring (37) und einen Deckel (38) innerhalb des Deckelrings (37) umfasst, wobei der Deckelring (37) und/oder der Deckel (38) gleitend, schwimmend und/oder gelagert an dem Grundkörper (34) angeordnet sind und/oder wobei die Deckelvorrichtung (36) befahrbar und auflastsicher für wenigstens 40 t ausgestaltet ist.

9. Messsystem (10) nach einem der vorangegangenen Ansprüche,
**dadurch gekennzeichnet,**
**dass** die zumindest zwei Leitungsvorrichtungen (50) die Schnittstellenvorrichtung (30) und die Messraumvorrichtung (20) zumindest abschnittsweise starr und/oder flexibel fluidkommunizierend verbinden.

10. Messsystem (10) nach einem der vorangegangenen Ansprüche,
**dadurch gekennzeichnet,**
**dass** das Messsystem (10) wenigstens eine Sensoreinheit (70) zur Erfassung von Druck und/oder Temperatur in dem Messvolumen (24) umfasst.

11. Messsystem (10) nach einem der vorangegangenen Ansprüche,
**dadurch gekennzeichnet,**
**dass** das Messsystem (10) eine Sende- und/oder Empfangseinheit (72) zum Senden und/oder Empfangen von Daten der Messvorrichtung (40) und/oder der wenigstens einen Sensoreinheit (70) umfasst.

12. Messsystem (10) nach einem der vorangegangenen Ansprüche,
**dadurch gekennzeichnet,**
**dass** das Messsystem (10) und/oder die Messvorrichtung (40) eine Spülvorrichtung (42) umfasst, wobei die Spülvorrichtung (42) zur Spülung des Messvolumens (24) mit einem Spülmedium ausgestaltet ist.

13. Verwendung eines Messsystems (10) zum Messen einer Permeationsrate (P) mit einer Erdleitung (100),
**dadurch gekennzeichnet,**
**dass** das Messsystems (10) nach einem der vorangegangenen Ansprüche ausgestaltet ist.

## Claims

1. A measuring system (10) for measuring a permeation rate (P) of a ground line (100), the measuring system (10) comprising a measuring chamber device (20) with a measuring volume (24) that is open at least in sections within the measuring chamber device (20), a mounting device (22) for mounting the measuring chamber device (20) and the measuring volume (24) that is open at least in sections to the ground line (100) to create a closed measuring volume (24) between the ground line (100) and the measuring chamber device (20), and at least one interface device (30), wherein the at least one interface device (30) is configured to connect a measuring device (40) for measuring the permeation rate (P) of the ground line (100) to the measuring volume (24), wherein the interface device (30) and the measuring chamber device (20) are connected in fluid communication with at least two conduit devices (50) of the measuring system (10), and wherein the at least two conduit devices (50) each comprise a valve device (52) for closing and opening the fluid-communicating connection between the interface device (30) and the measuring chamber device (20).

2. Measuring system (10) according to claim 1, **characterized in that** the measuring chamber device (20) comprises at least two feed-through openings (60, 62), wherein the at least two feed-through openings (60, 62) are configured for the passage of the ground line (100) into and out of the measuring chamber device (20).

3. Measuring system (10) according to claim 2, **characterized in that** the measuring chamber device (20) comprises at least two measuring chamber device halves (26, 28), wherein the at least two measuring chamber device halves (26, 28) are configured to jointly form the at least two feed-through openings (60, 62), in particular wherein the at least two measuring chamber device halves (26, 28) are configured to be coupled to one another vertically and/or horizontally.

4. Measuring system (10) according to any of the preceding claims, **characterized in that** the measuring chamber device (20) comprises at least one sealing device (74) for sealing the measuring chamber device (20), in particular the at least two feed-through openings (60, 62), to the ground line (100).

5. Measuring system (10) according to any of the preceding claims, **characterized in that** the interface device (30) is configured for connecting a measuring device (40) of the measuring system (10) and/or for detachably connecting a mobile measuring device (40).

6. Measuring system (10) according to any of the preceding claims, **characterized in that** the interface device (30) comprises a control interface (32) for controlling the at least two valve devices (52) to close and open the fluid-communicating connection between the interface device (30) and the measuring chamber device (20).

7. Measuring system (10) according to any of the preceding claims, **characterized in that** the interface device (30) comprises a base body (34) and a cover device (36), wherein the cover device (36) is configured to close and open the base body (34).

8. Measuring system (10) according to claim 7, **characterized in that** the cover device (36) comprises a cover ring (37) and a cover (38) within the cover ring (37), wherein the cover ring (37) and/or the cover (38) are arranged in a sliding, floating, and/or mounted manner on the base body (34), and/or wherein the cover device (36) is designed to be driveable and load-bearing for at least 40 t.

9. Measuring system (10) according to any of the preceding claims, **characterized in that** the at least two conduit devices (50) connect the interface device (30) and the measuring chamber device (20) in a fluid-communicating manner that is at least in sections rigid and/or flexible.

10. Measuring system (10) according to any of the preceding claims, **characterized in that** the measuring system (10) comprises at least one sensor unit (70) for detecting pressure and/or temperature in the measuring volume (24).

11. Measuring system (10) according to any of the preceding claims, **characterized in that** the measuring system (10) comprises a transmitting and/or receiving unit (72) for transmitting and/or receiving data from the measuring device (40) and/or the at least one sensor unit (70).

12. Measuring system (10) according to any of the preceding claims, **characterized in that** the measuring system (10) and/or the measuring device (40) comprises a flushing device (42), wherein the flushing device (42) is configured to flush the measuring volume (24) with a flushing medium.

13. Use of a measuring system (10) for measuring a permeation rate (P) with a ground line (100), **characterized in that** the measuring system (10) is configured according to one of the preceding claims.

## Revendications

1. Système de mesure (10) destiné à mesurer un taux de perméation (P) d'une conduite souterraine (100), le système de mesure (10) comprenant un dispositif de chambre de mesure (20) avec un volume de mesure (24) ouvert au moins par sections à l'intérieur du dispositif de chambre de mesure (20), un dispositif de fixation (22) destiné à fixer le dispositif de chambre de mesure (20) et le volume de mesure (24) ouvert au moins par sections sur la conduite souterraine (100) afin de créer un volume de mesure fermé (24) entre la conduite souterraine (100) et le dispositif de chambre de mesure (20), et au moins un dispositif d'interface (30), ledit au moins un dispositif d'interface (30) étant conçu pour le raccordement d'un dispositif de mesure (40) destiné à mesurer le taux de perméation (P) de la conduite souterraine (100) dans le volume de mesure (24), le dispositif d'interface (30) et le dispositif de chambre de mesure (20) sont reliés en communication fluidique à au moins deux dispositifs de conduite (50) du système de mesure (10) et lesdits au moins deux dispositifs de conduite (50) comprenant chacun un dispositif de vanne (52) destiné à fermer et à ouvrir la liaison en communication fluidique entre le dispositif d'interface (30) et le dispositif de chambre de mesure (20).

2. Système de mesure (10) selon la revendication 1, **caractérisé en ce que** le dispositif de chambre de mesure (20) comprend au moins deux ouvertures de passage (60, 62), lesdites au moins deux ouvertures de passage (60, 62) étant conçues pour le passage de la conduite souterraine (100) vers et depuis le dispositif de chambre de mesure (20).

3. Système de mesure (10) selon la revendication 2, **caractérisé en ce que** le dispositif de chambre de mesure (20) comprend au moins deux moitiés de dispositif de chambre de mesure (26, 28), lesdites au moins deux moitiés de dispositif de chambre de mesure (26, 28) étant conçues pour former conjointement lesdites au moins deux ouvertures de passage (60, 62), en particulier lesdites au moins deux moitiés de dispositif de chambre de mesure (26, 28) étant conçues pour être couplées verticalement et/ou horizontalement l'une à l'autre.

4. Système de mesure (10) selon l'une des revendications précédentes, **caractérisé en ce que** le dispositif de chambre de mesure (20) comprend au moins un dispositif d'étanchéité (74) destiné à assurer l'étanchéité du dispositif de chambre de mesure (20), en particulier des au moins deux ouvertures de passage (60, 62), par rapport à la conduite souterraine (100).

5. Système de mesure (10) selon l'une des revendications précédentes, **caractérisé en ce que** le dispositif d'interface (30) est conçu pour le raccordement d'un dispositif de mesure (40) du système de mesure (10) et/ou pour le raccordement amovible d'un dispositif de mesure mobile (40).

6. Système de mesure (10) selon l'une des revendications précédentes, **caractérisé en ce que** le dispositif d'interface (30) comprend une interface de commande (32) destinée à commander les au moins deux dispositifs de vanne (52) pour fermer et ouvrir la liaison en communication fluidique entre le dispositif d'interface (30) et le dispositif de chambre de mesure (20).

7. Système de mesure (10) selon l'une des revendications précédentes, **caractérisé en ce que** le dispositif d'interface (30) comprend un corps de base (34) et un dispositif de couvercle (36), le dispositif de couvercle (36) étant conçu pour fermer et ouvrir le corps de base (34).

8. Système de mesure (10) selon la revendication 7, **caractérisé en ce que** le dispositif de couvercle (36) comprend une bague de couvercle (37) et un couvercle (38) à l'intérieur de la bague de couvercle (37), la bague de couvercle (37) et/ou le couvercle (38) étant disposés de manière coulissante, flottants et/ou montés sur le corps de base (34) et/ou le dispositif de couvercle (36) étant conçu pour être praticable et résistant à une charge d'au moins 40 t.

9. Système de mesure (10) selon l'une des revendications précédentes, **caractérisé en ce que** les au moins deux dispositifs de conduite (50) relient le dispositif d'interface (30) et le dispositif de chambre de mesure (20) de manière rigide et/ou flexible, au moins par sections, en communication fluidique.

10. Système de mesure (10) selon l'une des revendications précédentes, **caractérisé en ce que** le système de mesure (10) comprend au moins une unité de capteur (70) pour détecter la pression et/ou la température dans le volume de mesure (24).

11. Système de mesure (10) selon l'une des revendications précédentes, **caractérisé en ce que** le système de mesure (10) comprend une unité d'émission et/ou de réception (72) destinée à émettre et/ou à recevoir des données provenant du dispositif de mesure (40) et/ou de l'au moins une unité de capteur (70).

12. Système de mesure (10) selon l'une des revendications précédentes, **caractérisé en ce que** le système de mesure (10) et/ou le dispositif de mesure (40) comprend un dispositif de rinçage (42), le dispositif de rinçage (42) étant conçu pour rincer le volume de mesure (24) avec un fluide de rinçage.

13. Utilisation d'un système de mesure (10) pour mesurer un taux de perméation (P) avec une conduite souterraine (100), **caractérisée en ce que** le système de mesure (10) est conçu selon l'une des revendications précédentes.
